# EUROPEAN PATENT SPECIFICATION

(11) **EP 1 207 742 B1**
(45) Date of publication and mention of the grant of the patent: **07.12.2005**
(21) Application number: 99936647.9
(22) Date of filing: 06.08.1999
(51) Int. Cl.: A01G 23/081

(54) **Grapple harvester with a bulk handling device**
Baumerntegreifer mit einer Handhabungsvorrichtung für Papierholz
Grappin d'abatteuse avec un dispositif de manutention du bois de papier

(43) Date of publication of application: 29.05.2002
(73) Proprietor: Waratah OM Oy, 80101 Joensuu (FI)
(72) Inventor: KETTUNEN, Veikko, FIN-83500 Outokumpu (FI); KINNUNEN, Kari, FIN-80130 Joensuu (FI); MAKKONEN, Jussi, FIN-80220 Joensuu (FI)
(74) Representative: Pitkänen, Hannu Alpo Antero
(86) International application number: PCT/FI1999/000655
(87) International publication number: WO 2001/010190

(56) References cited:
- SE-B- 461 824
- SE-C2- 509 581
- US-A- 5 161 588
- US-A- 5 163 489

## Description

The subject of the invention is a grapple harvester which is equipped with a felling and cutting device, a feeder and delimbing devices.

As part of forest management the young trees should be thinned at various stages of growth. The harvesting of small, first thinning trees is, however, dependent on the cost of mechanised harvesting of the trees, and is not carried out if it is too expensive. Attempts to solve this problem include the harvesting and processing of several trees simultaneously. There are various bulk handling devices available with which trees can be gathered together into one bundle. An example of this type of device is presented in patent publication FI 88853. Similarly, there are grapple harvesters that can process several trees simultaneously with the kind of equipment presented in patent publication FI 97340. A problem, however, with this kind of harvester is that the tree can slip onto or past the cutting device when a new tree is taken into the harvester grapple. The tree contacting the cutting device is then cut again, resulting in short lengths being left in the forest. Furthermore from patent publication SE 509 581 C a grapple harvester is known, which is equipped with a felling and bulk handling device.

Bulk handling devices are expensive specialist machinery designed for specific tasks and they are difficult to use and employ all year round. Although various contributing factors exist in other equipment, flexibility in forest operations is dependent on the bulk handling characteristics of the device not interfering with the normal handling of individual trees.

The purpose of this invention is to introduce a grapple harvester with which the problems associated with present devices can be resolved. In particular, the purpose of this invention is to speed up and facilitate the process of handling several trees simultaneously. In addition, the purpose of this invention is to introduce a grapple harvester which can be used as a bulk handling device whilst, at the same time, retaining the grapple harvester normal grab such that the same unit is suited as it stands for use both in first thinning work and in final felling.

The purpose of the invention is achieved with a grapple harvester that possesses the characteristics presented in the appended claims.

In the solution according to the invention, the grapple harvester is equipped with a bulk handling device which is arranged to grip together several trees, which are usually gathered one by one and, preferably, whilst in the vertical position, for cutting by the grapple harvester. The tree or trees are gripped by the bulk handling device while the next tree is gripped by the normal equipment of the grapple harvester, so that during all stages of the work the grip on the trees is retained alternately by the collector gripping devices and the feeder and trimming devices of the harvester head. In this way these trees cannot slip onto, or past the guide bar. When several trees can be gathered in the vertical position with the equipment, it can "bump" close to the next tree to be gripped so that the equipment functions in a stable manner. An important advantage of the invention is that the bulk handling device is an attachment to the grapple harvester and does not interfere with the normal felling work of the grapple harvester, for example, on the final felling site, where the harvester head can be used as a normal grab.

According to the invention, the bulk handling device is attached to the frame as an extension to the tilting arm, some distance from the felling and cutting devices and includes one or more gripping devices. In this way the bulk handling device, being sufficiently distant from the other gripping and feeder devices, helps in directing the tree bundle parallel with the delimbing line so that the blades do not dig into the wood and delimbing is made easier. In some arrangements, the bulk handling equipment can be attached, for example, to the tilting arm or to some other part.

According to the invention, the bulk handling device advantageously includes gripping devices which hold the cut and gathered trees in a tight grip and which can also gather new trees into their grip. When a suitable quantity of trees has been gathered in this way the tilting arm is released and, at the same time, the gripping devices open and let the tree bundle fall freely. The gathering gripping devices remain turned against the tilting arm when the trees are dropped into the threshing position, nor do they, in these circumstances, interfere with the delimbing.

In the bulk handling device according to the invention the gripping devices are equipped with separate extensions which are bent inwards. With these extensions the trees can be locked effectively into the bulk handling device.

In the following, the invention is explained in more detail with reference to the attached illustrations, in which:
FIG. 1 shows a grapple harvester with a bulk handling device in the tree gripping position, viewed from the side,
FIG. 2 shows a grapple harvester according to figure 1, viewed from the side, when the harvester's tilting frame has been released and the tree bundle is processed,
FIG. 3 shows a cross-section of the grapple harvester according to figure 1, viewed from above, at the location of the bulk handling device, with the gripping devices gripping the tree,
FIG. 4 shows a cross-section of the grapple harvester according to figure 1, viewed from above, at the location of the bulk handling device, with the gripping devices folded in, and
FIG. 5 shows the bulk handling device according to figure 1, viewed at an angle from behind.

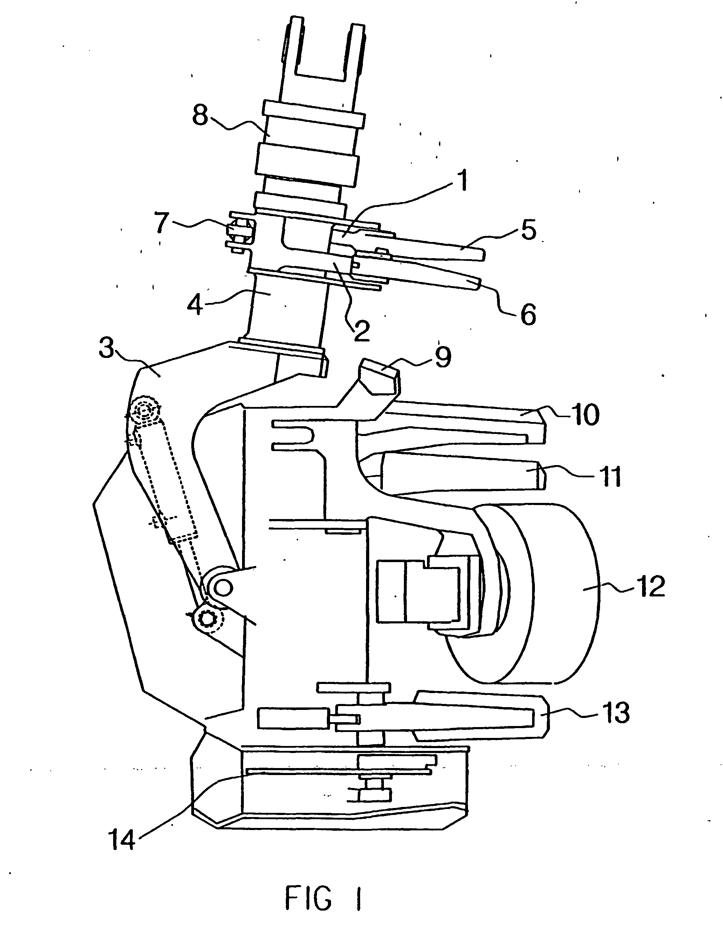

Figure 1 shows a single grip grapple harvester equipped with a device required for bulk handling 4. The grapple harvester includes the normal harvester equipment: delimbing devices 9, 10, 11, feeders 12, lower delimbing blade 13 and cutting device 14 which are swivel-connected to the tilting frame 3, i.e. the tilting arm. In addition, the equipment includes in the normal manner the rotator 8, which connects the equipment to the working machinery such that it can rotate (not shown in the figure).

The bulk handling device in this arrangement is located between the tilting frame 3 of the grapple harvester and the rotator 8. Attached by bearings to both sides of the frame of the bulk handling device 4 are separate gripping devices 1 and 2, on the ends of which are separate extension pieces bent inwards, i.e. the points 5 and 6, with which the trees to be gathered can be gripped. The bulk handling device 4 also includes an operating device 7 attached to the frame which, in this instance, is a hydraulic cylinder which is attached to the gripping devices 1,2. The gripping devices are activated by the cylinder unit The points are fitted with spring units 1a and 2a to ensure their troublefree retum. The spring units are attached to the gripping devices 1, 2 and points 5, 6 with the purpose of keeping the points in the same position relative to the gripping devices. The gripping devices are arranged so that they do not turn together with the grapple harvesters delimbing and feeder devices.

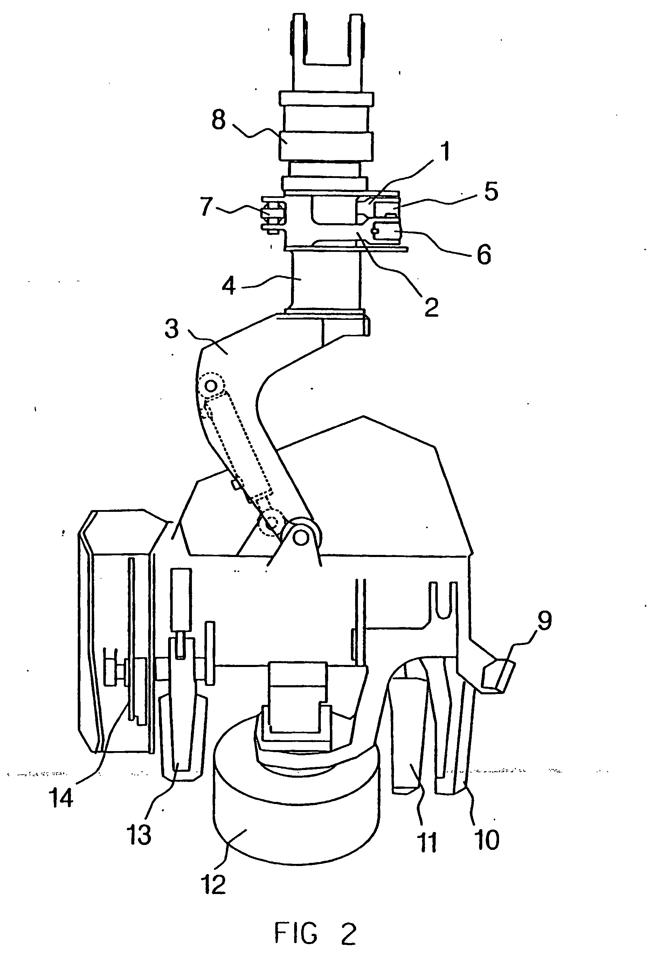

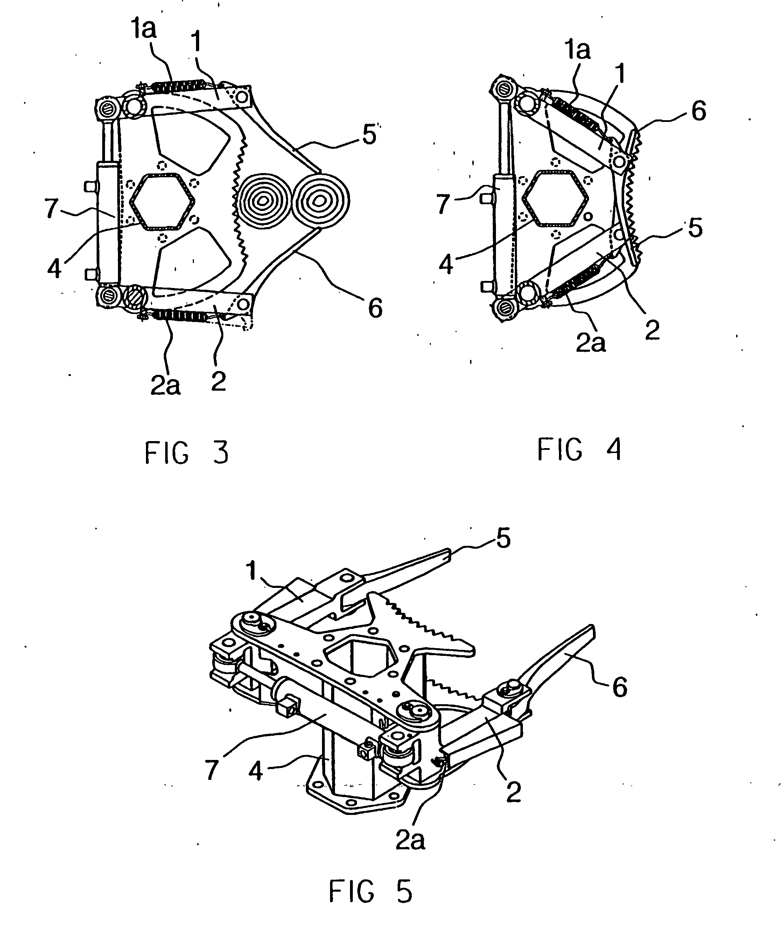

When using the grapple harvester, it is positioned next to the tree and the tree is gripped with the grapple harvester equipment and the bulk handling device. Figures 1 and 5 show the bulk handling device gripping devices 1, 2 in the gripping position. Figures 2 and 4 show the gripping devices 1, 2 in their closed position from which position the points 5, 6 move to the sides, when the equipment is in use and when the gripping devices 1, 2 open, and transfer onto the trunk of the first tree being felled and then onto the trunk of the second tree being felled and so on. Figure 3 shows a grapple harvester according to figure 1 at the stage when the gripping devices 1, 2 are holding two gathered trees after the gripping devices have opened during the cutting stage and closed again. When the gripping devices open they turn to the sides, and the tree can pass between the points 5, 6 of the gripping devices. At this stage the tree is held by the other devices 10, 11, 12, 13 of the grapple harvester. After this, the gripping devices 1, 2 are dosed and the bulk handling device with the gripping devices 1, 2 and their points 5, 6 are in the position shown in figure 3, where the tree trunks remain in the bulk handling device.

Figure 4 shows the bulk handling device 4 in the stage when the wood bundle is released from the bulk handling device and the gripping devices 1, 2 have returned from the gripping position to the closed position. Then they and the points 5, 6 are against the frame of the bulk handling device and do not interfere with the use of the grapple harvester in other operations.

In other arrangements the bulk handling device can be located at some other position in the structure. It is e.g. possible that the bulk handling device is a part of the tilting frame or the rotator.

The invention is not limited to the operating form described and many variations are possible within the framework of the invention concept formed by the claims.

## Claims

1. A grapple harvester which is equipped with a felling and cutting device (14), a feeder (12) and delimbing devices (9, 10, 11, 13), and is fitted with a bulk handling device (4), which is arranged to grip together several trees, which are usually gathered one by one whilst in the vertical position, for cutting by the grapple harvester, **characterised in that** the bulk handling device (4) is attached as an extension to the tilting arm (3), some distance from the felling and cutting device (14) and includes one or more turnable gripping devices (1, 2).

2. A grapple harvester according to claim 2, **characterised in that** the gripping devices (1, 2) are arranged so that they do not turn together with the delimbing and feeder devices (9, 10, 11, 13 and 12).

3. A grapple harvester according to claim 2, **characterised in that** the gripping devices (1, 2) are located on both sides of the frame of the bulk handling device (4) opposite of each other and can be turned in relation to it.

4. A grapple harvester according to claim 3 or 4, **characterised in that** gripping devices (1, 2) are equipped with separate extensions (5, 6) which are bent inwards.

5. A grapple harvester according to claim 5, **characterised in that** the bulk handling device (4) includes spring units (la, 2a) attached to the gripping devices (1, 2) and extensions (5, 6) to move the extensions into the gripping position.

6. A grapple harvester according to any of the claims 2-5, **characterised in that** the bulk handling device (4) includes an operating device (7) connected to the gripping devices (1, 2) which makes the gripping devices (1, 2) move.

## Patentansprüche

1. Greif-Erntemaschine, die mit einer Fäll- und Schneideeinrichtung (14), einer Zuführeinnchtung (12) und Entastungseinrichtungen (9, 10, 11, 13) ausgestattet ist, und mit einer Ladungs-Handhabungseinrichtung (4) ausgerüstet ist, die eingerichtet ist, mehrere Bäume gleichzeitig zu greifen, die normalerweise Stück für Stück durch die Greif-Erntemaschine zum Schneiden aufgenommen werden, während sie sich in vertikaler Position befinden, ***dadurch gekennzeichnet,* dass** die Ladungs-Handhabungseinrichtung (4) als eine Verlängerung des Knickarms (3) in einiger Entfernung von der Fäll- und Schneideeinrichtung (14) befestigt ist und ein oder mehrere drehbare Greifeinrictitungen (1, 2) enthält.

2. Greif-Erntemaschine Greiferntemaschine gemäß Anspruch **1,** ***dadurch gekennzeichnet, dass*** die Greifeinrichtungen (1, 2) so angeordnet sind, dass sie sich nicht zusammen mit den Entastungs-und Zuführeinrichtungen (9, 10, 11, 13 und 12) drehen.

3. Greif-Erntemaschine gemäß Anspruch **1, dadurch gekennzeichnet, dass** ***die*** Greifeinrichtungen (1, 2) an beiden Seiten des Rahmens der Ladungs-Handhabungseinrichtung (4) entgegengesetzt zueinander positioniert sind und relativ zu ihr gedreht werden können.

4. Greif-Erntemaschine gemäß Anspruch 2 oder 3, **dadurch *gekennzeichnet*, dass** die Greifeinrichtungen (1, 2) mit separaten Verlängerungen, (5, 6) ausgestattet sind, die nach innen gebogen sind.

5. Greif-Erntemaschine gemäß Anspruch 4, ***dadurch gekennzeichnet, dass*** die Ladungs-Handhabungseinrichtung (4) Federelemente (1a, 2a) enthält, die an den Greifeinrichtungen (1, 2) und den Verlängerungen (5, 6) befestigt sind, um die Verlängerungen in die Greifposition zu bewegen.

6. Greif-Erntemaschine gemäß einem der Ansprüche 2 bis 5, ***dadurch gekennzeichnet, d*****ass** die Ladungs-Handhabungseinrichtung (4) eine Betätigungseinrichtung (7) enthält, die mit den Greifeinrichtungen (1, 2) verbunden ist, die die Greifeinrichtungen (1, 2) bewegt.

## Revendications

1. Grappin d'abatteuse-ébrancheuse qui est équipé d'un dispositif d'abattage et de coupe (14), d'un dispositif d'alimentation (12) et de dispositifs d'ébranchage (9, 10, 11, 13), et qui est équipé d'un dispositif de manutention en vrac (4), qui est agencé de façon à saisir ensemble plusieurs arbres, qui sont habituellement ramassés un à un, tandis qu'il se trouve en position verticale, afin de procéder à la coupe grâce au grappin d'abatteuse-ébrancheuse , **caractérisé en ce que** le dispositif de manutention en vrac (4) est attaché en tant que dispositif prolongateur au bras inclinable (3), à une certaine distance du dispositif d'abattage et de coupe (14) et comporte un ou plusieurs dispositifs de préhension rotatifs (1, 2).

2. Grappin d'abatteuse-ébrancheuse selon la revendication 2, **caractérisé en ce que** les dispositifs de préhension (1, 2) sont agencés de sorte qu'ils n'effectuent pas une rotation en même temps que le dispositif d'ébranchage et d'alimentation (9, 10, 11, 13 et 12)

3. Grappin d'abatteuse-ébrancheuse selon la revendication 2, **caractérisé en ce que** les dispositifs de préhension (1, 2) sont situés sur les deux côtés du châssis du dispositif de manutention en vrac (4), opposés l'un à l'autre, et peuvent effectuer une rotation l'un par rapport à l'autre.

4. Grappin d'abatteuse-ébrancheuse selon la revendication 3 ou 4, **caractérisé en ce que** les dispositifs de préhension (1, 2) sont équipés de dispositifs prolongateurs séparés (5, 6) qui sont pliés vers l'intérieur.

5. Grappin d'abatteuse-ébrancheuse selon la revendication 5, **caractérisé en ce que** le dispositif de manutention en vrac (4) comporte des unités formant ressort (1a, 2a) attachées aux dispositifs de préhension (1, 2) et aux dispositifs prolongateurs (5, 6) pour déplacer les dispositifs prolongateurs dans la position de préhension.

6. Grappin d'abatteuse-ébrancheuse selon l'une quelconque des revendications 2 à 5, **caractérisé en ce que** le dispositif de manutention en vrac (4) comporte un dispositif d'actionnement (7) relié aux dispositifs de préhension (1, 2) qui fait se déplacer les dispositifs de préhension (1, 2).
